# EUROPEAN PATENT APPLICATION

(11) **EP 1 102 423 A2**
(43) Date of publication of application: **23.05.2001**
(21) Application number: 00403145.6
(22) Date of filing: 13.11.2000
(51) Int. Cl.: H04B 10/08

(54) **Method for the safe automatic restart of optical transmitters in fiber optic telecommunication systems**

(30) Priority: 18.11.1999 IT MI992407
(71) Applicant: ALCATEL, 75008 Paris (FR)
(72) Inventor: Miriello, Virgilio, 20059 Vimercate (Milano) (IT)
(74) Representative: Colombo, Stefano Paolo

(57) **Abstract**

A method is described for the safe automatic restart of optical transmitters (TX1, TX2) in a fiber optic telecommunication system. The method comprises the steps of monitoring the status of the system connections through an out-of-band signaling channel, in particular an Optical Supervisory Channel (OSC), through the transmission and the reception of signals (S1, S2) and restoring the optical transmitters only after having received the confirmation (S1) that the transmissive optical medium does not exhibit breaks.

## Description

The present invention relates to the field of fiber optic telecommunication systems. In particular it concerns the automatic restart, for instance upon the restore of a fault of optical transmitters in fiber optic telecommunication systems.

In fiber optic telecommunication systems, in the case of a fault of one equipment or a break in a fiber span, the present regulations provide for an Automatic Laser Shutdown (ALS) or an optical amplifier Automatic Power Reduction (APR) procedure for safety reasons. Analogously, procedures are provided for the automatic restart of the optical transmitters and of the optical amplifiers once the breakdown has been repaired.

Depending on whether the optical transport system is in controlled, unrestricted, restricted, etc., locations, the Standards provide for assuring optically safe working conditions and therefore for observing special Hazard Levels. As clearly defined in the Standard CEI EN 60825-2, September 1995, the "Hazard Level" is the potential hazard at any accessible place inside a fiber optic telecommunication system and it is based on the optical radiation level that could become accessible in reasonably predictable circumstances, for instance a fiber cable break.

Thus, on the basis of the above definition, a system can be considered as a Class 1 laser product when it is intrinsically safe both under normal operating conditions, when the optical radiations are completely shielded and no light is released outside the shield, and under broken fiber or optical connector disconnection conditions. Just to give another example, an Hazard Level 3A is requested to the optical interfaces of an optical transport network for equipments operating in restricted and controlled locations.

In systems having an operating power in the fiber that exceeds the Hazard Level 3A, an Automatic Power Reduction (APR) capability must be provided to reduce the operating power to a level which is below the safety level required for the case of restricted locations. In particular the use of APR techniques is provided to attain a lower Hazard Level based on the automatic reduction of the normal power level in the fiber and on the speed at which the power automatic reduction occurs. The speed of power reduction required to attain a specific hazard level can be determined from specific tables.

Just looking at these tables it is possible to argue that, for very high optical power systems (≤20 dBm), the speed requested for the APR is very high (i.e. the power must be reduced swiftly). Naturally, this is in contrast with the maximum response time of the optical amplifiers and limits the lowest value of the pulse duration in the restart phase. Moreover, in the best case, the APR procedure allows the use of the optical system in restricted and controlled locations only.

The ITU-T Recommendation G664 indicates these basic requirements for the APR procedures and the restart ones for single-channel or multichannel systems in OTN (Optical Transport Network) applications and for equipments operating in restricted and controlled locations. Such recommendation is incorporated by reference herein. In practice, the APR techniques, after the power reduction, must cause the remaining power level, including the power present in an optical supervision channel, to stay below a certain hazard level, which is provided in CEI EN 60825-2.

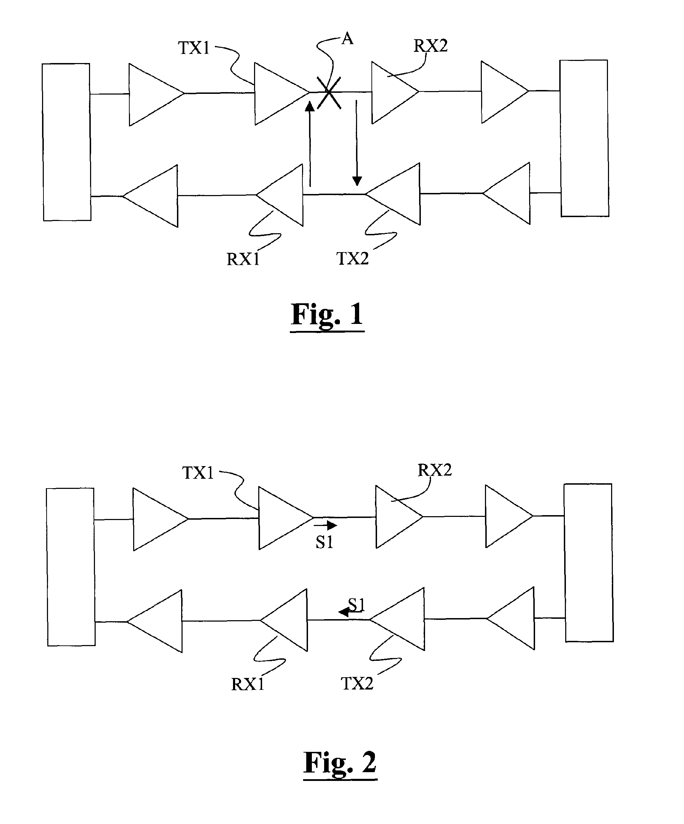

At present, should a cable break occur at point A of Fig. 1, the receiver RX2 will detect a Loss of Continuity in Transmission Section (OTS) defect and this defect is used to reduce the output power of the transmitter TX2, which is the adjacent optical source in the opposite direction. This operation in turn causes the receiver RX1 to detect a defect and to reduce the output power of transmitter TX1. The reduction of power to Hazard Level 3A (or to Hazard Level 1) for restricted locations (or for unrestricted locations) at all the optical outputs within the OTS section must be carried out within three seconds from the moment when the continuity in the OTS is interrupted.

Once the connection in the OTS has been repaired, a (manual or automatic) restart is necessary to restore the transmission which restart, anyway, must not occur before 100 seconds from the time when the interruption occurred or from the time when an unsuccessful restart action ceased. At any rate, during and after the restart action until the connection is assured, the optical power inside the OTS in question must not exceed the Hazard Level 3A (Hazard Level 1) for restricted environments (unrestricted environments). The allowed actual power level during the restart action depends on the duration thereof.

For high-power (=20 dBm) WDM systems the duration of the restart section must not exceed 400 ms to guarantee the Hazard Level 3A and to allow the use of the system in restricted locations; this value is close to the activation time necessary to restore the transmission in the OTS. This means that, for a higher power (> 20 dBm) system, the duration of the restart action necessary to satisfy the limiting Hazard Level is contrary to what is required to restore the optical system. Moreover, because of the "extended" nature of an optical system, the break point, where the optical power might be released during the restart procedure, could be at several kilometers from the optical transmitter and hence in an unrestricted, and accessible to whomsoever, location. In this case it should be necessary to guarantee the maximum safety by causing the transmitted power not to exceed the Hazard Level 1. In this connection, complicated power-reduction techniques are also necessary during the restart phase.

In view of the drawbacks pointed out above, it is the main object of the present invention to provide a method for the safe automatic restart of optical equipment in fiber optic telecommunication systems. This and further objects are achieved by a method having the features set forth in the independent claim 1. Further advantageous characteristics of the method are set forth in the dependent claims. All these claims are considered an integral part of the present description.

The basic idea is to provide a procedure with an approach that guarantees optically safe working conditions of Hazard Level 1 on the optical interfaces of the OTN network equipment. In this way it is possible to satisfy also the requirements for unrestricted locations thus solving the above problem.

In practice, the system is restored by giving power only after the optical connection has been restored, and the confirmation of restored connection is achieved by exploiting the supervision channel. Once the connection has been restored, the optical radiation is completely enclosed and, therefore, the optical system is considered safe by definition. It is no longer necessary to provide for limitations in the (restricted or unrestricted) zones and the procedure according to the invention is independent of the power level.

The invention will certainly result in being clear in the light of the following detailed description, given by way of a mere non limiting example, to be read with reference to the attached drawing sheets wherein:
- Fig. 1 shows how a cable break at point A is currently controlled, which break generates a loss of continuity;
- Fig. 2 shows an Optical Transmission Section, in a free-of-break condition, applied to which is the method according to the invention;
- Fig. 3 shows how a simple (at one point only) cable break in an Optical Transmission Section is controlled by means of the present invention; and
- Fig. 4 shows how a dual breaks in and Optical Transmission Section is controlled by means of the present invention.

The underlying idea of the present invention is to use an out-of-band signaling channel, preferably the Optical Supervisory Channel (OSC), for the transmission of signals indicating a normal operation (free of faults) condition or a fault (that can be simple or multiple) condition. In the following description, for the sake of clearness only, reference will solely be made to the OSC channel without limiting the invention therefore but it being understood to include every possible out-of-band signaling channel.

Referring at first to Fig. 2, under normal operation condition each of the transmitters TX1, TX2 sends, through the Optical Supervisory Channel (OSC), a signal S1 that, along with the main signal, indicates a continuity condition to the corresponding receivers RX1 and RX2.

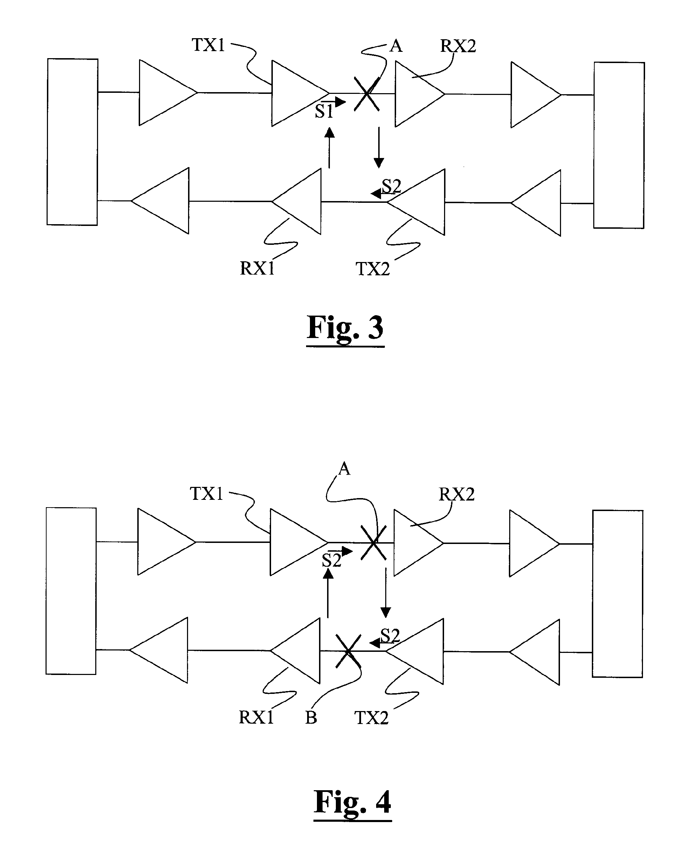

In the case where a single cable break (namely a break only at one point A, see Fig. 3) occurs, the consequent Loss of Continuity of Optical Transmission Section (namely loss of payload (main signal) and loss of OSC channel) alarm is detected at the receiver RX2 which no longer receives the signal S1. This criterion is used to reduce the output power and to send, still through the OSC channel, a signal S2 from the transmitter TX2 (that is found to be the adjacent laser source in the opposite direction), which signal S2 replaces S1. The detector RX1 receives the signal S2 and at the same time becomes aware of the loss of the main signal and the loss of the signal S1. The detection of signal S2 by RX1 in turn causes the main output power of the transmitter TX1 to be reduced. In any case, however, the transmitter TX1 goes on transmitting the signal S1 through the Supervisory Channel.

Once the connection in the OTS has been restored, the Loss of Continuity of the Optical Transmission Section alarm is eliminated at the receiver RX2; RX2 receives the signal S1. Accordingly S1 is sent again also by transmitter TX2 to RX1; RX1 restores the operational output power of the transmitter TX1 that goes on sending the signal S1. It should be noted that, when the receiver RX1 receives the signal S1, the restart of TX1 can occur at once since the connection is guaranteed.

An identical approach can be applied to the case of a double break in the cable, namely, a break in both directions (Fig. 4).

In the case where a double cable break at the points A and B of Fig. 4 occurs, the consequent Loss of Continuity of the Optical Transmission Section (loss of payload (main signal) and loss of OSC) alarm is detected at both receivers RX1 and RX2. According to the reception of such alarms, the main output power is reduced and a signal S2 is sent by transmitters TX2 and TX1 through the OSC channel, which signal S2 replaces S1.

Once the connection in the OTS section has been repaired at a first point (A), the receiver RX2 will no longer receive the Loss of Continuity of the Optical Transmission Section alarm but it will detect the signal S2. As a result of the connection restored A, the signal S1 is sent by the transmitter TX2 towards RX1.

Once the connection in the OTS has been repaired also at the second point (B), the receiver RX1 will no longer receive the alarm of Loss of Continuity of the Optical Transmission Section but it will only detect the signal S1. Since RX1 receives S1 from TX2, it is certain that the connection has been completely restored and it in turn restores the output power of the transmitter TX1 by sending the signal S1.

It is apparent that the solution described above allows the optical power within the OTS to have the operational value during the restore action. Nonetheless the optical system is provided with the same safeness.

The advantage of the solution is that, using the Automatic Power Reduction, the System is able to operate at the Hazard Level 1, hence in unrestricted locations, independently of the transmitted optical power level.

Naturally, the invention also extends to a computer program comprising computer program code means adapted to perform all the steps of the method when said program is run on a computer, as well as computer readable medium having a computer program recorded therein, said computer readable medium comprising computer program code means adapted to perform all the steps of the method when said program is run on a computer.

It is apparent that many modifications and variants could be imparted to the method according to the present invention without departing from the scope defined by the following claims.

## Claims

1. Method for the safe automatic restart of optical transmitters (TX1, TX2) in a fiber optic telecommunication system, said system comprising optical connections, characterized by comprising the steps of monitoring the status of the system connections through an out-of-band signaling channel, in particular an optical Supervisory Channel (OSC), through the sending and the reception of signals (S1, S2); and restarting the optical transmitters only after receiving the confirmation (S1) that the optical transmission medium has no breaks.

2. Method according to claim 1, characterized in that, in the absence of breaks, the first transmitter (TX1) sends through the out-of-band signaling channel (OSC) a first signal (S1) that is duly received by the receiver (RX2) adjacent thereto which communicates the information to the second transmitter (TX2) that similarly sends the same signal (S1) to the adjacent receiver through the out-of-band signaling channel (OSC) in such a way that the first transmitter keeps itself switched on and goes on sending the first signal (S1) regularly.

3. Method according to claim 1 or 2, characterized in that, in the event where a break has occurred at a first point (A) between the first transmitter (TX1) and the receiver (RX2) adjacent thereto and the main power of the transmitters has been duly reduced, the first transmitter (TX1) will go on sending the first signal (S1) through the out-of-band signaling channel (OSC) towards the adjacent receiver (RX2).

4. Method according to claim 3, characterized in that said receiver (RX2) adjacent to the first transmitter (TX1) will detect a loss of continuity but will not receive the signal (S1) sent it by the first transmitter (TX1) through the out-of-band signaling channel (OSC) and therefore it will cause the second transmitter (TX2) to send, through the out-of-band signaling channel (OSC), a second signal (S2); the receiver (RX1) adjacent to the second transmitter will detect a loss of continuity, it will receive the second signal (S2) and correspondingly inform the first transmitter which will merely send the first signal (S1) only.

5. Method according to claim 4, characterized in that once the receiver (RX2) adjacent to the first transmitter (TX1) receives the first signal (S1) from the out-of-band signaling channel (OSC) it will be sure that the connection has been restored and correspondingly it will cause the second transmitter (TX2) to restore the main output power and resumes transmitting the first signal (S1) instead of the second one (S2) over the out-of-band signaling channel (OSC), said first signal reaching the first transmitter (TX1) which also automatically restores the main output power.

6. Method according to claim 1 or 2, characterized in that, in the event where a break has occurred at a first point (A) between the first transmitter (TX1) and the receiver (RX2) adjacent thereto and at a second point (B) between the second transmitter (TX2) and the receiver (RX1) adjacent thereto, and the main power of the transmitters (TX1, TX2) has been duly reduced, both transmitters (TX1, TX2) will send the second signal (S2) through the out-of-band signaling channel (OSC) towards the respective adjacent receivers (RX2, RX1);

7. Method according to claim 6, characterized in that once the connection has been repaired at the first point (A), the second transmitter (TX2) sends the first signal (S1) through the out-of-band signaling channel (OSC) towards the receiver (RX1) adjacent thereto.

8. Method according to claim 7, characterized in that once the connection has been repaired at the second point (B), the receiver (RX1) adjacent to the second transmitter (TX2) receives the first signal (S1) through the out-of-band signaling channel (OSC) and causes the first transmitter (TX1) to restore the output power.

9. Computer program comprising computer program code means adapted to perform all the steps of claims 1-8 when said program is run on a computer.

10. Computer readable medium having a computer program recorded therein, said computer readable medium comprising computer program code means adapted to perform all the steps of claims 1-8 when said program is run on a computer.
